# EUROPÄISCHE PATENTSCHRIFT

(11) **EP 0 621 106 B1**
(45) Veröffentlichungstag und Bekanntmachung des Hinweises auf die Patenterteilung: **06.08.1997**
(21) Anmeldenummer: 94105915.6
(22) Anmeldetag: 15.04.1994
(51) Int. Cl.: B24B 1/00, B24B 33/08

(54) **Pneumatische Messvorrichtung zur Ermittlung des Durchmessers einer zu bearbeitenden Bohrung**
Pneumatic measuring device for measuring the diameter of a borehole to be machined
Dispositif de mesure pneumatique pour déterminer le diamètre d'un alésage à usiner

(30) Priorität: 16.04.1993 DE 4312411
(43) Veröffentlichungstag der Anmeldung: 26.10.1994
(73) Patentinhaber: STOTZ FEINMESSTECHNIK GmbH, D-70839 Gerlingen (DE)
(72) Erfinder: Basar, Ivan, D-70469 Stuttgart (DE)
(74) Vertreter: Dipl.-Phys.Dr. Manitz Dipl.-Ing. Finsterwald Dipl.-Ing. Grämkow Dipl.-Chem Dr. Heyn Dipl.Phys. Rotermund Morgan, B.Sc.(Phys)

(56) Entgegenhaltungen:
- DE-A- 3 322 167
- FR-A- 1 140 335
- US-A- 3 651 608

## Beschreibung

Die Erfindung betrifft eine pneumatische Meßvorrichtung zur Ermittlung des Durchmessers einer in einem Werkstück mittels eines rotierenden Werkzeugkörpers - insbesondere eines Honwerkzeugkörpers - zu bearbeitenden Bohrung, mit einer - in der Regel stationären - pneumatischen Druckquelle, welche über einen Drehverteiler und zumindest eine damit kommunizierende, im bzw. am Werkzeugkörper bzw. seiner Halterung angeordnete Luftzuführleitung mit Meßdüsen am Werkzeugkörper verbunden ist, über die die zugeführte Luft gegen die Wand der Bohrung geblasen wird, und mit einer pneumatischen Druckmeßanordnung, welche Veränderungen des sich mit der Weite des Luftspaltes zwischen den Meßdüsen und der Wand der Bohrung verändernden Staudruckes wiedergibt bzw. als Durchmesserveränderung der Bohrung darstellt.

Derartige Meßvorrichtungen werden an Honmaschinen serienmäßig angeordnet, um den Werkzeugkopf in Abhängigkeit von den Meßsignalen steuern zu können (vgl. FLORES, Gerhard: "Grundlagen und Anwendungen des Honens", Vulkan-Verlag Essen, 1992, Seiten 184 und 185, ISBN 3-8027-2904-8).

Dabei erfolgt üblicherweise anstelle einer Absolutmessung eine Relativmessung, indem mit der Meßanordnung die Druckdifferenz zwischen einem zu den Meßdüsen führenden ersten Leitungszweig und einem zweiten Leitungszweig ermittelt wird, welcher zu einer Referenzdüse mit vorgebbarem Drosselwiderstand führt. Dabei ist die Referenzdüse ebenso wie die pneumatische Druckquelle üblicherweise stationär angeordnet, während der zweite Leitungszweig mit dem Drehverteiler kommuniziert.

Der Drehverteiler besitzt einerseits stationäre und andererseits zusammen mit dem Werkzeugkörper bzw. mit dessen Halterung rotierende Teile, die gegeneinander abgedichtet sein müssen, um einen unkontrollierten Leckstrom von Luft aus dem Drehverteiler zu vermeiden.

Zwar bietet die Dichtungstechnik hinreichende Möglichkeiten, Spalte zwischen relativ zueinander schnell beweglichen Teilen abzuschließen. Jedoch ist der damit verbundene Aufwand bei Meßanordnungen der eingangs angegebenen Art sehr hoch, weil auch kleinere Leckagen am Drehverteiler das Meßergebnis vergleichsweise stark verändern können. Hierbei sind insbesondere Veränderungen der Dichtigkeit des Drehverteilers nach einer Justage der Meßvorrichtung besonders kritisch.

Deshalb ist es Aufgabe der Erfindung, die Reproduzierbarkeit der Meßergebnisse bei einer Vorrichtung der eingangs angegebenen Art wesentlich zu verbessern.

Diese Aufgabe wird erfindungsgemäß dadurch gelöst, daß die Druckmeßanordnung in Strömungsrichtung der Luft (bzw. des jeweils verwendeten pneumatischen Mediums) hinter dem Drehverteiler, d.h. zusammen mit dem Werkzeugkörper rotierend, angeordnet ist.

Die Erfindung beruht auf dem allgemeinen Gedanken, die Meßanordnung am bzw. im Werkzeugkopf oder an bzw. in dessen rotierender Halterung anzuordnen, so daS Undichtigkeiten des Drehverteilers ohne Einfluß auf das Meßergebnis sind und dementsprechend an die Dichtigkeit des Drehverteilers nur geringe Ansprüche gestellt zu werden brauchen. Im wesentlichen muß nur gewährleistet sein, daS vom Drehverteiler hinreichend viel Luft bzw. pneumatisches Medium zu den Meßdüsen gelangt.

Gemäß einer bevorzugten Ausführungsform der Erfindung ist vorgesehen, daß die Meßwertübertragung zwischen der Druckmeßanordnung und einer Anzeige und vorzugsweise auch die Energieversorgung der Meßanordnung drahtlos erfolgen, beispielsweise induktiv.

Soweit die Meßanordnung durch fliehkraftbedingte Effekte beeinflußt wird, kann dieser Einfluß bei der Eichung der Meßanordnung berücksichtigt werden. Beispielsweise kann das Meßsignal aufgezeichnet werden, während der Werkzeugkopf in einer Bohrung mit bekanntem Durchmesser rotiert. Wenn nun drehzahlabhängige Veränderungen des Meßsignales aufgezeichnet werden, so lassen sich diese Veränderungen bei einer nachfolgenden Vermessung einer Bohrung mit unbekanntem Durchmesser rechnerisch kompensieren, um ein Meßergebnis höchster Genauigkeit zu erhalten.

Im Hinblick auf konstruktive Einfachheit ist es im allgemeinen vorteilhaft, wenn die Meßanordnung in bzw. an der Halterung des Werkzeugkopfes angeordnet ist, weil dort verhältnismäßig viel Freiraum zur Anordnung zur Verfügung steht.

Grundsätzlich ist es jedoch auch möglich und vorteilhaft, die Meßanordnung im Werkzeugkopf unterzubringen, d.h. in unmittelbarer Nähe zu den Meßdüsen. Diese Anordnung bietet den meßtechnischen Vorteil, daß Änderungen des Staudruckes im Spalt zwischen den Meßdüsen und der Wand der Bohrung trotz einer endlichen Fortpflanzungsgeschwindigkeit der Druckänderungen praktisch ohne Verzögerung an der Meßanordnung auftreten und damit eine sofortige Veränderung der Justage der Werkzeuge des Werkzeugkörpers ermöglichen.

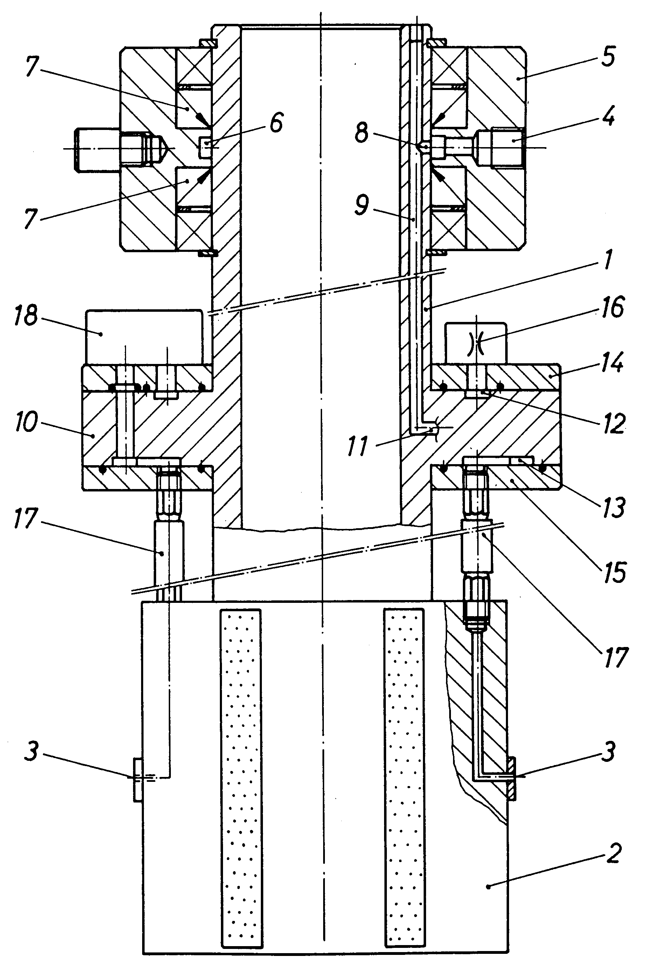

Im übrigen wird hinsichtlich bevorzugter Merkmale der Erfindung auf die Ansprüche sowie die nachfolgende Erläuterung einer in der Zeichnung dargestellten vorteilhaften Ausführungsform verwiesen.

Dabei zeigt die einzige Figur einen Vertikalschnitt einer Halterung eines Honwerkzeugkörpers.

Ein Halterohr 1, welches an seinem unteren Ende einen lediglich schematisch dargestellten Honwerkzeugkörper 2 trägt, ist mit seinem oberen Ende an einer nicht dargestellten Werkzeugmaschine gehaltert, welche bei der Honbearbeitung von Bohrungen eines Werkstückes das Halterohr 1 mit dem Honwerkzeugkörper 2 zu Rotationsbewegungen mit hoher Drehzahl antreibt.

Innerhalb des Halterohres sind nicht dargestellte Stellorgane zur Verstellung der Honwerkzeuge des Honwerkzeugkörpers 2 angeordnet.

Am Honwerkzeugkörper 2 sind radial nach außen gerichtete pneumatische Meßdüsen 3 angeordnet, durch die in weiter unten dargestellter Weise Luft gegen die Wandung einer (nicht dargestellten), mit dem Honwerkzeugkörper 2 zu bearbeitenden Bohrung eines Werkstückes ausgeblasen wird. Das Ausblasen der Luft erfolgt gegen den Widerstand eines Staudruckes, welcher von der Weite des Spaltes zwischen den Meßdüsen 3 und der Wandung der Bohrung abhängig ist. Der Staudruck stellt also ein analoges Maß für die Weite des genannten Spaltes und damit auch für den Durchmesser der Bohrung dar.

Zur Luftversorgung der Meßdüsen 3 ist eine (nicht dargestellte) pneumatische Druckquelle mit einem Druckanschluß 4 eines stationären Drehverteilers 5 verbunden, welcher das Halterohr 1 ringförmig umfaßt und auf seiner das Halterohr 1 umfassenden Innenumfangswand eine mit dem Druckanschluß 4 kommunizierende Ringnut 6 aufweist. Diese Ringnut 6 bildet also einen das Halterohr 1 umschließenden, mit dem Druckanschluß 4 verbundenen Ringraum. Dieser Ringraum ist nach außen durch Dichtungen 7 abgeschlossen, welche zwischen dem Halterohr 1 und dem stationären Teil des Drehverteilers 5 angeordnet sind.

Im Bereich der Ringnut 6 besitzt das Halterohr 1 eine oder mehrere Radialbohrungen 8, die ihrerseits mit einem oder mehreren in der Wandung des Halterohres 1 angeordneten Axialkanälen 9 verbunden sind. Die über den Druckanschluß 4 in die Ringnut 6 eingeführte Luft kann also auch bei Drehungen des Halterohres 1 relativ zum stationären Teil des Drehverteilers 5 über die Radialbohrung 8 in den Axialkanal 9 einströmen.

Im Bereich eines am Halterohr 1 angeordneten Flansches 10 ist der Axialkanal 9 mit einem Radialkanal 11 verbunden, welcher über nicht näher dargestellte gedrosselte Leitungen mit zwei Ringräumen 12 und 13 verbunden ist, welche im dargestellten Beispiel durch Ringnuten gebildet werden, die auf der Ober- und Unterseite des Flansches 10 angeordnet und durch auf dem Flansch 10 aufliegende Ringscheiben 14 und 15 abgedeckt sind.

Der obere Ringraum 12 ist mit einer Referenzdüse 16 verbunden, welche einen vorgegebenen, gegebenenfalls einstellbaren Drosselwiderstand aufweist und die ausströmende Luft in den Freiraum oberhalb des Flansches 10 leitet.

Der untere Ringraum 13 ist über Anschlußleitungen 17 mit den Meßdüsen 3 verbunden.

Zwischen den pneumatischen Drucken in den Ringräumen 12 und 13 tritt beim Betrieb eine mehr oder weniger große Druckdifferenz auf, deren Wert von dem an den Meßdüsen 3 auftretenden Staudruck abhängig ist.

Zur Messung dieser Druckdifferenz dient ein Differenzdruckmesser 18, welcher über entsprechende Kanäle im Flansch 10 bzw. in den Ringscheiben 14 und 15 mit den Ringräumen 12 und 13 verbunden ist.

Der Differenzdruckmesser 18 ist über drahtlos arbeitende Signalübertragungsmittel mit einer nicht dargestellten, stationären Anzeige verbunden. Die elektrische Stromversorgung des am Halterohr 1 angeordneten Teiles der Signalübertragung erfolgt drahtlos, beispielsweise induktiv.

Abweichend von der in der Zeichnung dargestellten Anordnung kann der Differenzdruckmesser 18 auch in unmittelbarer Nähe zu den Meßdüsen 3 am bzw. im Honwerkzeugkörper 2 angeordnet sein, so daß Änderungen des an den Meßdüsen 3 auftretenden Staudruckes praktisch ohne zeitliche Verzögerung registriert werden können. Änderungen des Staudruckes pflanzen sich von den Meßdüsen 3 innerhalb der zum Differenzdruckmesser 18 führenden pneumatischen Wege mit einer Geschwindigkeit in der Größenordnung von 1 m/s fort. Bei Anordnung des Differenzdruckmessers 18 am bzw. im Honwerkzeugkörper 2 kann diese Fortpflanzungsbeschwindigkeit vernachlässigt werden. Damit wird eine Korrektur der Einstellung der Honwerkzeuge am Honwerkzeugkörper 2 während der Werkstückbearbeitung möglich.

Die Dichtungen 7 zwischen dem Drehverteiler 5 und dem Halterohr 1 können auch entfallen und durch einen Spalt mit ausgeprägter Drosselwirkung ersetzt werden. Denn bei der dargestellten Anordnung ist eine Leckage des Drehverteilers 5 unkritisch. Es muß lediglich gewährleistet sein, daß ein ausreichender und zeitlich nicht bzw. nur geringfügig und langsam veränderlicher Luftstrom zu den Meßdüsen 3 gelangt.

## Patentansprüche

1. Pneumatische Meßvorrichtung zur Ermittlung des Durchmessers einer in einem Werkstück mittels eines rotierenden Werkzeugkörpers - insbesondere eines Honwerkzeugkörpers - zu bearbeitenden Bohrung, mit einer - in der Regel stationären - pneumatischen Druckquelle, welche über einen Drehverteiler und zumindest eine damit kommunizierende, im bzw. am Werkzeugkörper bzw. seiner Halterung angeordnete Luftzuführleitung mit Meßdüsen am Werkzeugkörper verbunden ist, über die die zugeführte Luft gegen die Wand der Bohrung geblasen wird, und mit einer pneumatischen Druckmeßanordnung, welche Veränderungen des sich mit der Weite des Luftspaltes zwischen den Meßdüsen und der Wand der Bohrung verändernden Staudruckes wiedergibt bzw. als Durchmesserveränderung der Bohrung darstellt,
dadurch gekennzeichnet,
daß die Druckmeßanordnung (18) in Strömungsrichtung der Luft hinter dem Drehverteiler (5), d.h. zusammen mit dem Werkzeugkörper (2) rotierend, angeordnet ist.

2. Meßvorrichtung nach Anspruch 1,
dadurch gekennzeichnet,
daß eine drahtlose Meßwertübertragung zwischen der Druckmeßanordnung (18) und einer Anzeige vorgesehen ist.

3. Meßvorrichtung nach Anspruch 1 oder 2,
dadurch gekennzeichnet,
daß eine drahtlose Energieversorgung für die Druckmeßanordnung (18) und/oder den am Werkzeugkörper (2) bzw. seiner Halterung (1) angeordneten Teil der Meßwertübertragung vorgesehen ist.

4. Meßvorrichtung nach einem der Ansprüche 1 bis 3,
dadurch gekennzeichnet,
daß die Druckmeßanordnung (18) am bzw. im Werkzeugkörper (2) angeordnet ist.

5. Meßvorrichtung nach einem der Ansprüche 1 bis 4,
dadurch gekennzeichnet,
daß die Druckmeßanordnung (18) an bzw. in der Halterung (1) des Werkzeugkörpers (2) angeordnet ist.

6. Meßvorrichtung nach einem der Ansprüche 1 bis 5,
dadurch gekennzeichnet,
daß die Druckmeßanordnung (18) auf eine Druckdifferenz zwischen einem mit den Meßdüsen (3) verbundenen ersten Leitungszweig (13) und einem zweiten Leitungszweig (12) reagiert, der mit einer am Werkzeugkörper (2) bzw. an dessen Halterung (1) angeordneten Referenzdüse (16) mit vorgegebenem Drosselwiderstand verbunden ist.

7. Meßvorrichtung nach einem der Ansprüche 1 bis 6,
dadurch gekennzeichnet,
daß zur Eichung der Meßvorrichtung fliehkraftbedingte Einflüsse auf die Druckmeßanordnung (18) separat aufgezeichnet werden.

## Claims

1. Pneumatic measurement apparatus for the determination of the diameter of a bore to be machined in a workpiece by means of a rotating tool body, in particular of a honing tool body, comprising a pneumatic pressure source - which is, as a rule, stationary - which is connected via a rotary distributor, and via at least one air supply line communicating therewith and arranged in or on the tool body or its mounting, with measurement nozzles at the tool body via which the supplied air is blown against the wall of the bore, and comprising a pneumatic pressure measuring arrangement which reproduces changes of the stagnation pressure, which varies with the width of the air gap between the measurement nozzles and the wall of the bore, or represents it as a change in the diameter of the bore, characterised in that the pressure measuring arrangement (18) is arranged in the flow direction of the air after the rotary distributor (5), i.e. rotates together with the tool body (2).

2. Measurement apparatus in accordance with claim 1, characterised in that a wireless transmission of the measured value is provided between the pressure measuring arrangement (18) and a display.

3. Measurement apparatus in accordance with claim 1 or claim 2, characterised in that a wireless energy supply is provided for the pressure measuring arrangement (18) and/or the part of the measured value transmission system arranged on the tool body (2) or its mounting (1).

4. Measurement apparatus in accordance with one of the claims 1 to 3, characterised in that the pressure measuring arrangement (18) is arranged on the tool body (2) or in the tool body (2).

5. Measurement apparatus in accordance with one of the claims 1 to 4, characterised in that the pressure measuring arrangement (18) is arranged on or in the mounting (1) of the tool body (2).

6. Measurement apparatus in accordance with one of the claims 1 to 5, characterised in that the pressure measuring arrangement (18) reacts to a pressure difference between a first line branch (13) connected to the measurement nozzles (3) and a second line branch (12) which is connected to a reference nozzle (16) with a preset restrictor resistance arranged on the tool body (2) or on its mounting (1).

7. Measurement apparatus in accordance with one of the claims 1 to 6, characterised in that for the calibration of the measurement device centrifugal force dependent influences on the pressure measuring arrangement (18) are recorded separately.

## Revendications

1. Dispositif pneumatique de mesure pour la détermination du diamètre d'un trou devant être usiné dans une pièce au moyen d'un corps rotatif d'outil - en particulier d'un corps d'outil de honage -, comprenant une source de pression pneumatique - en général occupant une position fixe - qui est raccordée par un distributeur rotatif et au moins un conduit d'arrivée d'air communiquant avec ce dernier et disposé dans ou sur le corps d'outil ou sur le support de celui-ci à des tuyères de mesures que comporte le corps d'outil et par lesquelles l'air d'arrivée est insufflé contre la paroi du trou, et comprenant par ailleurs un système manométrique pneumatique qui reproduit les variations de la pression dynamique changeant avec la largeur de l'interstice d'air compris entre les tuyères de mesure et la paroi du trou ou les représente sous forme de variation de diamètre du trou,
caractérisé en ce que le système manométrique (18) est disposé par rapport au sens de la circulation de l'air derrière le distributeur rotatif (5), c'est à dire de manière qu'il tourne avec le corps d'outil (2).

2. Dispositif de mesure selon la revendication 1,
caractérisé
en ce qu'une transmission sans fil des mesures est prévue entre le système manométrique (18) et un affichage.

3. Dispositif de mesure selon la revendication 1 ou 2,
caractérisé
en ce qu'une alimentation sans fil en énergie du système manométrique (18) et/ou de la partie de la transmission des mesures qui est disposée sur le corps d'outil (2) ou sur son support (1) est prévue.

4. Dispositif de mesure selon l'une des revendications 1 à 3,
caractérisé
en ce que le système manométrique (18) est disposé sur ou dans le corps d'outil (2).

5. Dispositif de mesure selon l'une des revendications 1 à 4,
caractérisé
en ce que le système manométrique (18) est disposé sur ou dans le support (1) du corps (2) de l'outil.

6. Dispositif de mesure selon l'une des revendications 1 à 5,
caractérisé
en ce que le système manométrique (18) réagit à une différence de pression entre un premier embranchement de conduit (13) relié aux tuyères de mesure (3) et un second embranchement de conduit (12) qui est raccordé à une tuyère de référence (16) disposée sur le corps d'outil (2) ou sur son support (1) et présentant une résistance prescrite provoquée par un étranglement.

7. Dispositif de mesure selon l'une des revendications 1 à 6,
caractérisé
en ce que, pour l'étalonnage du dispositif de mesure, des influences dues à la force centrifuge et produites sur le système manométrique (18) sont enregistrées séparément.
